# EUROPEAN PATENT APPLICATION

(11) **EP 4 615 068 A1**
(43) Date of publication of application: **10.09.2025**
(21) Application number: 22963969.5
(22) Date of filing: 03.11.2022
(51) Int. Cl.: H04W 52/04

(54) **DISCONTINUOUS RECEPTION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Aldridge, Henry Alexander
(86) International application number: PCT/CN2022/129667
(87) International publication number: WO 2024/092659

(57) **Abstract**

The disclosure relates to a discontinuous reception (DRX) method, a terminal device, and a network device. The method can include the following. A terminal device starts a first timer at a first time after a time when a low-power wake-up signal (LP-WUS) is received by the terminal device, where the first timer is a drx-onDuration timer. In embodiments of the disclosure, the terminal device restarts the first timer at the first time after the time when the LP-WUS is received by the terminal device, and thus the terminal device can enter DRX as soon as possible and save power.

## Description

### TECHNICAL FIELD

This disclosure relates to the field of communication, in particular to a discontinuous reception (DRX) method, a terminal device, and a network device.

### BACKGROUND

With people's pursuit of speed, delay, high-speed mobility, and power efficiency and the diversity and complexity of services in future life, the 3rd generation partnership project (3GPP), an international standard organization, has begun to develop a fifth-generation mobile communication technology (5G). 5G is mainly applicable in scenarios such as enhanced mobile broadband (eMBB), ultra-reliable low-delay communications (URLLC), and massive machine-type communication (mMTC). In 5G new radio (NR), a terminal can be more power-saving based on a discontinuous reception (DRX) function.

### SUMMARY

A discontinuous reception (DRX) method, a terminal device, and a network device are provided in embodiments of the disclosure, which can be more power-saving.

A DRX method is provided in embodiments of the disclosure. The method includes the following. A terminal device starts a first timer at a first time after a time when a low-power wake-up signal (LP-WUS) is received by the terminal device, where the first timer is a drx-onDuration timer.

A DRX method is provided in embodiments of the disclosure. A network device sends first configuration information to a terminal device, where the first configuration information is used for configuring a first timer, the first timer is a timer started by the terminal device at a first time after a time when an LP-WUS is received by the terminal device, and the first timer is a drx-onDuration timer.

A terminal device is provided in embodiments of the disclosure. The terminal device includes a processing unit. The processing unit is configured to start a first timer at a first time after a time when an LP-WUS is received by the processing unit, where the first timer is a drx-onDuration timer.

A network device is provided in embodiments of the disclosure. The network device includes a first sending unit. The first sending unit is configured to send first configuration information to a terminal device, where the first configuration information is used for configuring a first timer, the first timer is a timer started by the terminal device at a first time after a time when an LP-WUS is received by the terminal device, and the first timer is a drx-onDuration timer.

A terminal device is provided in embodiments of the disclosure. The terminal device includes a processor and a memory. The memory is configured to store a computer program. The processor is configured to invoke and execute the computer program stored in the memory, to cause the terminal device to perform the DRX method.

A network device is provided in embodiments of the disclosure. The network device includes a processor and a memory. The memory is configured to store a computer program. The processor is configured to invoke and execute the computer program stored in the memory, to cause the network device to perform the DRX method.

A chip is provided in embodiments of the disclosure. The chip is configured to implement the DRX method.

Specifically, the chip includes a processor. The processor is configured to invoke and execute a computer program stored in a memory, to cause a device equipped with the chip to perform the DRX method.

A computer-readable storage medium is provided in embodiments of the disclosure. The computer-readable storage medium is configured to store a computer program which, when executed by a device, causes the device to perform the DRX method.

A computer program product is provided in embodiments of the disclosure. The computer program product includes computer program instructions that are operable with a computer to perform the DRX method.

A computer program is provided in embodiments of the disclosure. The computer program which, when executed on a computer, causes a computer to perform the DRX method.

In embodiments of the disclosure, the terminal device restarts the first timer at the first time after the time when the LP-WUS is received by the terminal device, and thus the terminal device can enter DRX as soon as possible and save power.

### BRIEF DESCRIPTION OF THE DRAWINGS

FIG. 1 is a schematic diagram of an application scenario according to embodiments of the disclosure.
FIG. 2 is a schematic diagram illustrating a long discontinuous reception (DRX) cycle and a short DRX cycle according to embodiments of the disclosure.
FIG. 3A and FIG. 3B are schematic diagrams illustrating an operation principle of a low-power wake-up signal (LP-WUS) according to embodiments of the disclosure.
FIG. 4 is a schematic flow chart of a DRX method according to an embodiment of the disclosure.
FIG. 5 is a schematic flow chart of a DRX method according to another embodiment of the disclosure.
FIG. 6 is a schematic flow chart of a DRX method according to another embodiment of the disclosure.
FIG. 7 is a schematic flow chart of a DRX method according to an embodiment of the disclosure.
FIG. 8 is a schematic flow chart of a DRX method according to another embodiment of the disclosure.
FIG. 9 is a flow chart illustrating a specific implementation of Example 1 according to the disclosure.
FIG. 10 is a flow chart illustrating a specific implementation of Example 2 according to the disclosure.
FIG. 11 is a flow chart illustrating a specific implementation of Example 3 according to the disclosure.
FIG. 12 is a schematic block diagram of a terminal device according to an embodiment of the disclosure.
FIG. 13 is a schematic block diagram of a terminal device according to another embodiment of the disclosure.
FIG. 14 is a schematic block diagram of a network device according to an embodiment of the disclosure.
FIG. 15 is a schematic block diagram of a network device according to another embodiment of the disclosure.
FIG. 16 is a schematic block diagram of a communication device according to embodiments of the disclosure.
FIG. 17 is a schematic block diagram of a chip according to embodiments of the disclosure.
FIG. 18 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure may be applicable to various wireless communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication System (UMTS), a wireless local area network (WLAN), a wireless fidelity (WiFi), a 5th-generation (5G) communication system, or other communication systems.

Generally speaking, a conventional communication system generally supports a limited number (quantity) of connections and therefore is easy to implement. However, with the development of communication technology, a mobile communication system will not only support a conventional communication but also support, for example, device-to-device (D2D) communication, machine-to-machine (M2M) communication, machine-type communication (MTC), vehicle-to-vehicle (V2V) communication, vehicle to everything (V2X) communication, etc. The technical solutions of embodiments of the disclosure are also applicable to these wireless communication systems.

In an embodiment, the communication system in embodiments of the disclosure may be applicable to a carrier aggregation (CA) scenario, or may be applicable to a dual connectivity (DC) scenario, or may be applicable to a standalone (SA) scenario.

In an embodiment, the communication system in embodiments of the disclosure is applicable to an unlicensed spectrum, and the unlicensed spectrum may be regarded as a shared spectrum. Alternatively, the communication system in embodiments of the disclosure is applicable to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, a network device in an NTN, etc.

By way of explanation rather than limitation, in embodiments of the disclosure, the network device may be mobile. For example, the network device may be a mobile device. Optionally, the network device may be a satellite or a balloon base station (BS). For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a BS deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a BS). The cell may belong to a macro BS, or may belong to a BS corresponding to a small cell. The small cell may include: a metro cell, a micro cell, a pico cell, a femto cell, and the like. These small cells are characterized by small coverage and low transmission power and are adapted to provide data transmission service with high-rate.

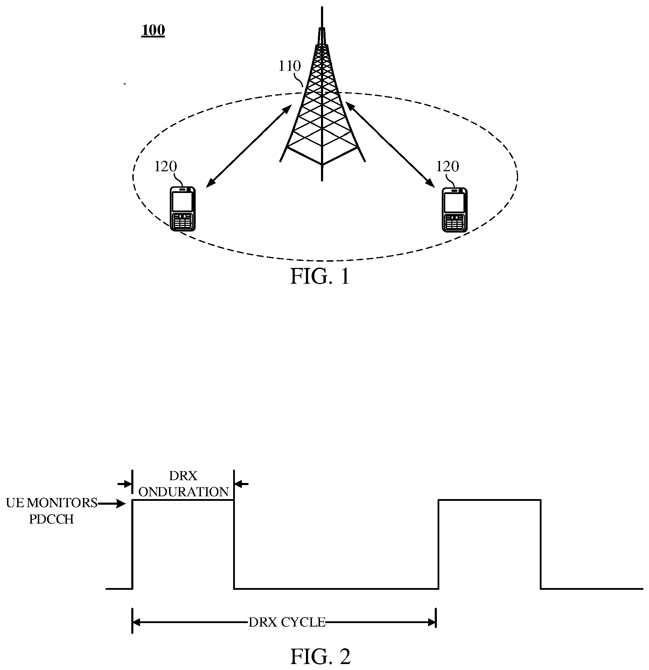

FIG. 1 exemplarily illustrates a communication system 100. The communication system 100 includes one network device 110 and two terminal devices 120. In an embodiment, the communication system 100 may also include multiple network devices 110, and there can be other quantities of terminal devices 120 in the coverage of each network device 110, which is not limited in embodiments of the disclosure.

In an embodiment, the communication system 100 may further include other network entities such as a mobility management entity (MME), an access and mobility management function (AMF), etc., which is not limited in embodiments of the disclosure.

The network device may further include an access network (AN) device and a core network (CN) device. That is, the wireless communication system further includes multiple CNs for communication with the AN device. The AN device may be an eNB (or e-NodeB) macro BS, micro BS (also referred to as "small BS"), pico BS, access point (AP), transmission point (TP) or new-generation base station (new generation Node B, gNodeB), etc., in a long-term evolution (LTE) system, a next generation (next radio, NR) (mobile communication) system or authorized auxiliary access long-term evolution (LAA-LTE) system.

It can be understood that, in embodiments of the disclosure, a device with communication functions in a network/system can be referred to as a "communication device". Taking the communication system illustrated in FIG. 1 as an example, the communication device may include the network device and the terminal device(s) that have communication functions. The network device and the terminal device(s) can be the devices in embodiments of the disclosure, which will not be repeated herein. The communication device may further include other devices such as a network controller, an MME, or other network entities in the communication system, which is not limited in embodiments of the disclosure.

It can be understood that, the terms "system" and "network" herein are usually used interchangeably throughout this disclosure. The term "and/or" herein only describes an association relationship between associated objects, and indicates that there may be three relationships, for example, A and/or B may mean A alone, both A and B exist, and B alone. In addition, the character "/" herein can indicate that the associated objects are in an "or" relationship.

It can be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association between the two, may mean a relationship of indicating and indicated or configuring and configured, etc.

To facilitate understanding of the technical solutions of embodiments of the disclosure, related art of embodiments of the disclosure will be described in detail below. The following related art as an optional scheme can be arbitrarily combined with the technical solutions of embodiments of the disclosure, which shall all belong to the protection scope of embodiments of the disclosure.

NR may also be deployed separately. In a 5G network environment, a new radio resource control (RRC) state, namely an RRC_INACTIVE state, is provided in order to reduce air-interface signaling, realize quick recovery of a radio connection, and realize quick recovery of data services. This state is different from an RRC_IDLE state and an RRC_CONNECTED state.

RRC_IDLE: mobility is based on cell selection and re-selection of a UE. Paging is initiated by a CN, and a paging area is configured by the CN. A BS side does not have UE access stratum (AS) context. There is no RRC connection.

RRC_CONNECTED: there is an RRC connection. Both the BS and the UE have the UE AS context. A network side knows that a location of the UE is cell level-based. Mobility is controlled by the network side. Unicast data can be transmitted between the UE and the BS.

RRC_INACTIVE: mobility is based on cell selection and re-selection of the UE. There is a CN-NR connection. A certain BS has the UE AS context. Paging is triggered by a radio access network (RAN), a RAN-based paging area is managed by the RAN, and the network side knows that the location of the UE is RAN-based paging area level.

5G NR discontinuous reception (DRX) process

In the 5G NR, a network can configure a DRX function for a terminal, so that the terminal can perform discontinuous physical downlink control channel (PDCCH) monitoring, thereby saving power of the terminal. Each medium access control (MAC) entity corresponds to one DRX configuration. For example, DRX configuration parameters may include the following.

drx-onDuration timer (*drx-onDurationTimer*): a duration of wake-up of the UE at the beginning of a DRX cycle.

drx slot offset (*drx-SlotOffset*): a delay before the UE starts the drx-onDuration timer.

drx-Inactivity timer (*drx-InactivityTimer*): a duration during which the UE continues to perform PDCCH monitoring after a PDCCH indicating a new uplink (UL) or downlink (DL) transmission is received by the UE.

drx-DL-Retransmission timer (*drx-RetransmissionTimerDL*): the maximum duration during which a PDCCH indicating DL retransmission scheduling is monitored by the UE. Each DL hybrid automatic repeat request (HARQ) process, except for a broadcast HARQ process, corresponds to one drx-DL-Retransmission timer.

drx-UL-Retransmission timer (*drx-RetransmissionTimerUL*): the maximum duration during which a PDCCH indicating UL retransmission scheduling is monitored by the UE. Each UL HARQ process corresponds to one drx-UL-Retransmission timer.

long DRX cycle start offset (*drx-LongCycleStartOffset*): used for configuring a long DRX cycle and an offset of a subframe where the long DRX cycle and a short DRX cycle start.

short DRX cycle (*drx-ShortCycle*): a short DRX cycle, which is optional.

short DRX cycle timer (*drx-ShortCycleTimer*): a duration during which the UE is in a short DRX cycle (and no PDCCH is received by the UE), which is optional.

drx DL HARQ round trip time (RTT) timer (*drx-HARQ-RTT-TimerDL*): the minimum duration before reception of a PDCCH indicating DL scheduling is expected by the UE. Each DL HARQ process, except for the broadcast HARQ process, corresponds to one drx-DL-HARQ-RTT timer.

drx-UL-HARQ-RTT timer (*drx-HARQ-RTT-TimerUL*): the minimum duration before reception of a PDCCH indicating UL scheduling is expected by the UE. Each UL HARQ process corresponds to one drx-UL-HARQ-RTT timer.

If the terminal device is configured with DRX, the terminal device needs to perform PDCCH monitoring in a DRX active time. The DRX active time may include the following cases: any one of *drx-onDurationTimer, drx-InactivityTimer, drx-RetransmissionTimerDL, drx-RetransmissionTimerUL,* or a random access (RA) contention resolution timer (*ra-ContentionResolutionTimer*) is running; a scheduling request (SR) is sent on a PUCCH and is pending; and in a contention-based RA procedure, a PDCCH indicating a new transmission addressed to a cell radio network temporary identifier (C-RNTI) has not been received by the terminal after successful reception of an RA response.

In the related mechanism, DRX long DRX is a default configuration, and DRX short DRX is an optional configuration. A terminal configured with the short DRX cycle can switch between the long DRX cycle and the short DRX cycle in the following manners.

The terminal uses a DRX short cycle (i.e., short DRX cycle) when any one of the following conditions is satisfied: drx-Inactivity timer expires; and the terminal receives a DRX Command MAC control element (MAC CE).

The terminal uses a DRX long cycle (i.e., long DRX cycle) when any one of the following conditions is satisfied: drx-ShortCycle timer expires; and the terminal receives a long DRX Command MAC CE.

As illustrated in FIG. 2, the terminal device may determine, based on whether the terminal device is currently in the long DRX cycle or in the short DRX cycle, a time when the drx-onDuration timer is started. For example, if the short DRX cycle is used and a current subframe satisfies [(SFN×10) + subframe number] modulo (*drx-ShortCycle*)*=*(*drx-StartOffset*) modulo (*drx-ShortCycle*), or if the long DRX Cycle is used and the current subframe satisfies [(SFN×10)+subframe number] modulo (*drx-LongCycle*)*=drx-StartOffset,* drx-onDuration timer is started at a time after *drx-SlotOffset* slot(s) from the beginning of the current subframe.

In the above formula, SFN indicates a system frame number (SFN), "subframe number" indicates the number of subframes, "modulo" indicates modulo operation, *drx-ShortCycle* indicates the short DRX cycle, *drx-StartOffset* indicates that a DRX starts offset, and *drx-LongCycle* indicates the long DRX cycle.

A condition for the terminal to start or restart a drx-Inactivity timer may include the following. When a PDCCH indicating a new DL or UL transmission is received by the terminal, the terminal starts or restarts the drx-Inactivity timer.

A condition for the terminal to start or stop a drx-DL-Retransmission timer may include the following. When a PDCCH indicating a DL transmission is received by the terminal or an MAC protocol data unit (PDU) is received by the terminal on a configured DL grant, the terminal stops a drx-DL-Retransmission timer corresponding to an HARQ process. After the terminal completes the transmission of an HARQ process feedback for the DL transmission, the terminal starts a drx-DL-HARQ-RTT timer corresponding to the HARQ process.

If a drx-DL-HARQ-RTT timer corresponding to a certain HARQ process for the terminal expires and DL data transmitted by using the HARQ process was not successfully decoded, the terminal starts a drx-DL-Retransmission timer corresponding to the HARQ process.

A condition for the terminal to start or stop a drx-UL-Retransmission timer may include the following. When a PDCCH indicating a UL transmission is received by the terminal or an MAC PDU is transmitted by the terminal on a configured UL grant, the terminal stops a drx-UL-Retransmission timer corresponding to an HARQ process. After the terminal completes the first repetition of a physical uplink shared channel (PUSCH), the terminal starts a drx-UL-HARQ-RTT timer corresponding to the HARQ process. If a drx-UL-HARQ-RTT timer corresponding to a certain HARQ process for the terminal expires, the terminal starts a drx-UL-Retransmission timer corresponding to the HARQ process.

### Wake-up signal (WUS)

In NR R16, a power-saving signal is introduced. The UE starts blind detection of a PDCCH-based power-saving signal (i.e., PDCCH-WUS) at an offset time before a start time of a drx-onDuration timer corresponding to each long DRX cycle. If the PDCCH-WUS is detected and the WUS indicates that the UE is to wake up, the UE starts the drx-onDuration timer during the long DRX cycle. If the PDCCH-WUS is detected and the WUS indicates that the UE is not to wake up, the UE does not start the drx-onDuration timer.

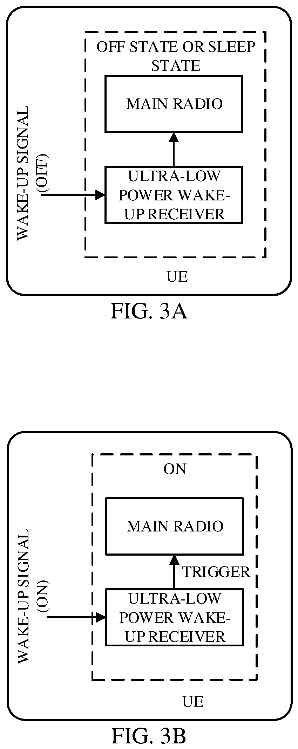

Related connected-state power-saving technologies, such as DRX mechanism and WUS mechanism, are designed for the case where a main radio (also referred to as "main receiver") of the terminal stays in an ON state. In R18, many companies want to consider a WUS with lower power consumption, i.e., ultra-low power consumption WUS. Compared with the WUS mechanism in R16, the LP-WUS is more power-saving. A separate receiver with lower power consumption can be used for the LP-WUS, i.e., the main radio is not used to receive the LP-WUS. After the LP-WUS is received by the terminal, the terminal starts the main radio to monitor a DL signal, so as to save power. As illustrated in FIG. 3A, if an ultra-low power wake-up receiver is in an OFF state, the main radio cannot be woken up via the WUS, and thus the main radio is in the OFF state or a sleep state. As illustrated in FIG. 3B, if the ultra-low power wake-up receiver is in an ON state, the main radio can be triggered to wake up via the WUS. Based on the LP-WUS, the solutions of embodiments of the disclosure can reflect the influence of the LP-WUS on a DRX mechanism in a connected state.

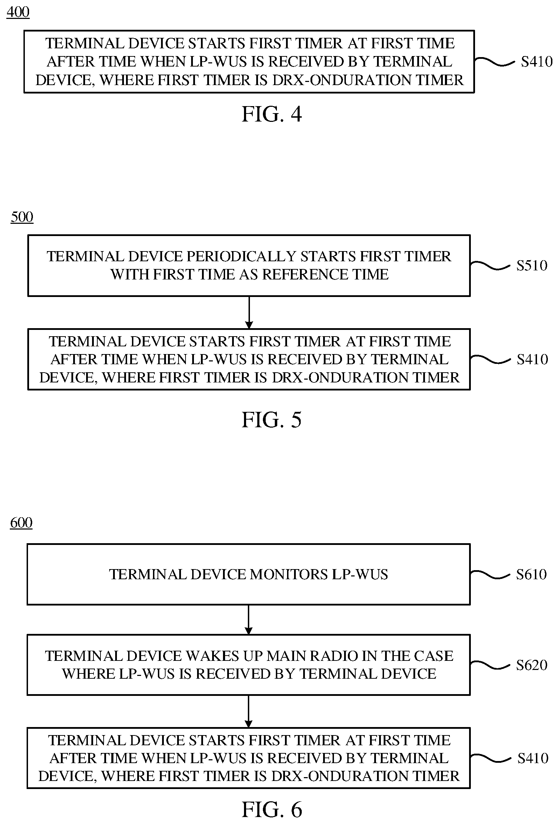

FIG. 4 is a schematic flow chart of a DRX method 400 according to an embodiment of the disclosure. The method is optionally applicable to the system illustrated in FIG. 1, but is not limited thereto. The method includes at least part of the following.

S410, a terminal device starts a first timer at a first time after a time when an LP-WUS is received by the terminal device, where the first timer is a drx-onDuration timer.

In embodiments of the disclosure, the first time may be a time after a period of time from the time when the LP-WUS is received by the terminal device. During this period of time, the terminal device can wake up a main radio through a low-power receiver. After the main radio is woken up, the main radio can perform PDCCH monitoring during the running of the first timer. As such, the terminal device can have time to perform wake-up operation, thereby saving more power by means of the DRX mechanism. With the solutions of embodiments of the disclosure, after the LP-WUS is received by the terminal device, the terminal device can enter a DRX active time for PDCCH monitoring as soon as possible, thereby minimizing service delay and saving power of the terminal device.

In embodiments of the disclosure, the drx onDuration may also be referred to as "drx-on duration". The drx-onDuration timer may also be referred to as "drx-on duration timer", "drx duration timer", etc. When the first timer is running, the terminal device performs PDCCH monitoring.

In an embodiment, the first time is a time after a first time offset from the time when the LP-WUS is received.

In embodiments of the disclosure, the terminal device may start the drx-onDuration timer, such as a drx-on duration timer, at the time after the first time offset from the time when the LP-WUS is received by the terminal device. The first time offset may be determined based on a time required for the low-power receiver to wake up the main radio.

In some examples, the first time offset may be greater than or equal to the time required for the low-power receiver to wake up the main radio. In this case, the low-power receiver can have enough time to wake up the main radio. For example, a time required for a low-power receiver of UE1 to wake up the main radio is T1, and a first time offset of UE1 may be greater than or equal to T1.

In some examples, the first time offset may be less than the time required for the low-power receiver to wake up the main radio. In this case, the low-power receiver can have certain time to wake up the main radio, thereby minimizing delay while saving power.

In some examples, different terminal devices may have different first time offsets. For example, in a case where a time required for a low-power receiver of UE2 to wake up the main radio is T2, a first time offset of UE2 may be greater than or equal to T2. T2 may be different from T1 in the above example, and the first time offset of UE2 may be different from the first time offset of UE1.

In an embodiment, the first time offset is determined by the terminal device or configured by a network device.

For example, the terminal device determines the first time offset by itself, and then sends the first time offset to the network device.

For another example, the network device determines the first time offset. The terminal device receives configuration information from the network device, where the configuration information is used for configuring the first time offset. The configuration information may contain a duration of the first time offset, or may contain an indication value indicating a corresponding duration.

In an embodiment, operations at S410, i.e., the terminal device starts the first timer at the first time after the time when the LP-WUS is received by the terminal device, include the following. In the case where the first timer is not started by the terminal device at the first time, the terminal device starts the first timer.

For example, if the drx-onDuration timer is not started by the terminal device at the time after the first time offset from the time when the LP-WUS time is received by the terminal device, the terminal device starts the drx-onDuration timer. If the terminal device has already started one drx-onDuration timer in the above case, the terminal device does not need to restart the drx-onDuration timer and can continue to use the original drx-onDuration timer.

In an embodiment, operations at S410, i.e., the terminal device starts the first timer at the first time after the time when the LP-WUS is received by the terminal device, include the following. In the case where the terminal device is during a drx onDuration and the first timer is not started by the terminal device at the first time, the terminal device starts the first timer.

For example, if the terminal device is during the drx onDuration and the drx-onDuration timer is not started by the terminal device at the time after the first time offset from the time when the LP-WUS time is received by the terminal device, the terminal device starts the drx-onDuration timer. If the terminal device has already started one drx-onDuration timer in the above case, the terminal device does not need to restart the drx-onDuration timer and can continue to use the original drx-onDuration timer.

In an embodiment, the terminal device is in an RRC_CONNECTED state and in a low-power receiver state.

In embodiments of the disclosure, when the terminal device is in the low-power receiver state, an LP-WUS receiver is in operation, and the main radio is in an OFF state.

For example, a terminal device in an RRC_CONNECTED state and in the low-power receiver state is triggered to start the main radio at a time when the LP-WUS is received by the LP-WUS receiver, and starts the drx-onDuration timer at the time after the first time offset from the time when the LP-WUS is received by the LP-WUS receiver.

For another example, the terminal device in the RRC_CONNECTED state and in the low-power receiver state is triggered to start the main radio at the time when the LP-WUS is received by the LP-WUS receiver, and if the drx-onDuration timer is not started by the terminal device at the time after the first time offset from the time when the LP-WUS is received by the LP-WUS receiver, the terminal device starts the drx-onDuration timer.

For another example, the terminal device in the RRC_CONNECTED state and in the low-power receiver state is triggered to start the main radio at the time when the LP-WUS is received by the LP-WUS receiver, and if the terminal device is during the drx onDuration and the drx-onDuration timer is not started by the terminal device at the time after the first time offset from the time when the LP-WUS is received by the LP-WUS receiver, the terminal device starts the drx-onDuration timer.

In an embodiment, the first time includes at least one of the following time units: a time symbol, a slot, or a subframe.

For example, the terminal device starts the drx-onDuration timer at a time unit, such as symbol *f*1, after the first time offset from the time when the LP-WUS is received by the terminal device.

For another example, if the drx-onDuration timer is not started by the terminal deivce at a time unit, such as slot *n*1, after the first time offset from the time when the LP-WUS is received by the terminal device, the terminal device starts the drx-onDuration timer.

For another example, if the terminal device is during the drx onDuration and the drx-onDuration timer is not started by the terminal device at a time unit, such as subframe *s*1, after the first time offset from the time when the LP-WUS is received by the terminal device, the terminal device starts the drx-onDuration timer.

In an embodiment, a duration of the first timer is a remaining duration of the drx onDuration.

In embodiments of the disclosure, if the terminal device has been during the drx onDuration at the first time, a duration of a first timer newly started may be equal to the remaining duration of the drx onDuration. For example, if a current drx onDuration is T_{D} and a passed duration of the current drx onDuration of the terminal device at the first time is T_{Dx}, the duration of the first timer satisfies T_{Dx}=T_{D}-T_{Dx}.

In an embodiment, as illustrated in FIG. 5, a DRX method 500 further includes the following.

S510, the terminal device periodically starts the first timer with the first time as a reference time.

In embodiments of the disclosure, if the first timer is started at a first time *t* in a certain DRX cycle, the first timer may be periodically started with reference to the first time *t* in subsequent DRX cycles. For example, in a case where a duration of a DRX cycle is *C*, and the first timer is started at the time t in DRX cycle *D1,* the first timer may be started at a time *t+C* in DRX cycle *D2* subsequent to DRX cycle *D1,* may be started at a time *t*+2×*C* in DRX cycle *D3* subsequent to DRX cycle *D*2, and so on.

In an embodiment, a cycle during which the first timer is started is a short DRX cycle or a long DRX cycle.

For example, if the cycle during which the first timer is started is a long DRX cycle *CL* and the first timer is started at the time *t* in DRX cycle *D1,* the first timer may be started at a time *t+CL* in DRX cycle *D*2 subsequent to DRX cycle *D1.*

For another example, if the cycle during which the first timer is started is a short DRX cycle *CS* and the first timer is started at the time *t* in DRX cycle *D1*, the first timer may be started at a time *t+CS* in DRX cycle *D*2 subsequent to DRX cycle *D1.*

In an embodiment, the duration of the first timer is configured by the network device.

In embodiments of the disclosure, if the duration of the first timer is configured by the network device, the terminal device can receive configuration information from the network device, where the configuration information is used for configuring the duration of the first timer. The configuration information may contain the duration of the first timer, or may contain an indication value indicating a corresponding duration. The duration of the first timer and the first time offset may be configured through same configuration information, or may be configured separately through different configuration information.

In an embodiment, as illustrated in FIG. 6, a DRX method 600 further includes the following.

S610, the terminal device monitors the LP-WUS.

In an embodiment, as illustrated in FIG. 6, the DRX method 600 further includes the following.

S620, in the case where the LP-WUS is received by the terminal device, the terminal device wakes up the main radio.

In embodiments of the disclosure, the terminal device in the RRC_CONNECTED state and in the low-power receiver state monitors the LP-WUS, and the low-power receiver of the terminal device is triggered to wake up the main radio of the terminal device at the time when the LP-WUS is received, and performs the operations at S410, i.e., starts the first timer at the first time after the time when the LP-WUS is received by the terminal device. The main radio can perform PDCCH monitoring during the running of the first timer.

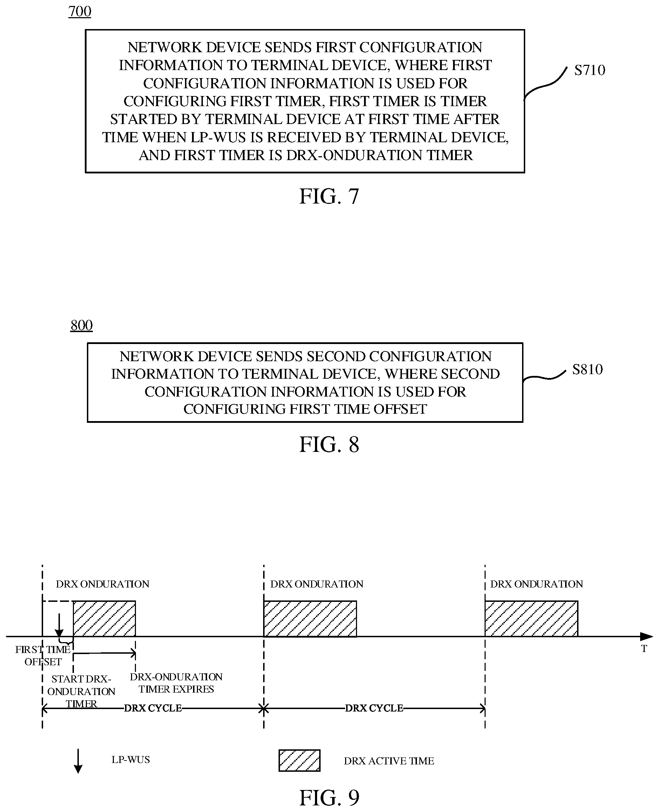

FIG. 7 is a schematic flow chart of a DRX method 700 according to an embodiment of the disclosure. The method is optionally applicable to the system illustrated in FIG. 1, but is not limited thereto. The method includes at least part of the following.

S710, a network device sends first configuration information to a terminal device, where the first configuration information is used for configuring a first timer, the first timer is a timer started by the terminal device at a first time after a time when an LP-WUS is received by the terminal device, and the first timer is a drx-onDuration timer.

In an embodiment, the first configuration information is used for configuring a duration of the first timer.

In embodiments of the disclosure, if the duration of the first timer is configured by the network device, the network device can send configuration information to the terminal device, where the configuration information is used for configuring the duration of the first timer. The configuration information may contain the duration of the first timer, or may contain an indication value indicating a corresponding duration.

In an embodiment, the duration of the first timer is a remaining duration of a drx onDuration.

In an embodiment, the first time includes at least one of the following time units: a time symbol, a slot, or a subframe.

In an embodiment, the first time is a time after a first time offset from the time when the LP-WUS is received by the terminal device.

In an embodiment, as illustrated in FIG. 8, a DRX method 800 further includes the following.

S810, a network device sends second configuration information to a terminal device, where the second configuration information is used for configuring the first time offset.

In embodiments of the disclosure, if the terminal device determines the first time offset by itself, the terminal device can send the first time offset to the network device. If the network device determines the first time offset, the network device can send the second configuration information to the terminal device, where the second configuration information is used for configuring the first time offset. The configuration information may contain a duration of the first time offset, or may contain an indication value indicating a corresponding duration.

In embodiments of the disclosure, the duration of the first timer and the first time offset may be configured through same configuration information, or may be configured separately through different configuration information.

For specific examples of the method 700 and the method 800 that are performed by the network device in embodiments of the disclosure, reference may be made to related elaboration of the method 400, the method 500, and the method 600, which are not repeated herein for simplicity.

The DRX method provided in embodiments of the disclosure is a DRX method performed by a terminal based on an LP-WUS. The method may mainly include the following.
1. A UE in an RRC_CONNECTED state starts a drx-onDuration timer at a time t after a first time offset from a time when the LP-WUS is received by the UE.
2. If the UE is during a drx onDuration and the drx-onDuration timer is not started by the UE at the time t after the first time offset from the time when the LP-WUS is received by the UE in the RRC_CONNECTED state, the UE starts the drx-onDuration timer.
3. A duration of the drx-onDuration timer started in this case is a remaining duration of the drx onDuration.
4. The duration of the drx-onDuration timer may be a duration configured by a network.
5. The UE periodically starts the drx-onDuration timer with the time t as a reference time, and a cycle may be a short DRX cycle or a long DRX cycle.

The following are several examples of the DRX method according to embodiments of the disclosure.

### Example 1

If the UE in the RRC_CONNECTED state is during the drx onDuration, such as DRX onDuration, and the drx-onDuration timer is not started by the UE at the time t after the first time offset from the time when the LP-WUS is received by the UE, the UE starts the drx-onDuration timer. The duration of the drx-onDuration timer started in this case is the remaining duration of the drx onDuration.

As illustrated in FIG. 9, the specific implementation of Example 1 is as follows.
1. The UE in the RRC_CONNECTED state and in a low-power receiver state monitors the LP-WUS. When the UE is in the low-power receiver state, only an LP-WUS receiver is in operation, and a main radio is in an OFF state.
2. When the LP-WUS is received by the UE, the UE wakes up the main radio. If the UE is during the drx onDuration at a time unit *n* after the first time offset from the time when the LP-WUS is received by the UE, e.g., the UE is during a period from *t*1 to *t*1+*drx-onDurationTimer,* where *drx-onDurationTimer* can be a timer duration configured by the network for the UE through RRC, and if the UE has not currently started the drx-onDuration timer such as drx-on duration timer (e.g., the LP-WUS is received by the UE after the time *t*1), the UE starts the drx-onDuration timer. The duration of the drx-onDuration timer started by the UE in this case is the remaining time of the DRX onDuration.

The value of the first time offset may be determined by the UE itself and then reported to the network, or may be determined by the network and then sent to the UE.

The time unit may be, but is not limited to, any one of: a time symbol, a slot, or a subframe.

The time *t*1 may be a start time of the drx-onDuration timer in the related art. For example, *t*1 satisfies at least one of the following conditions: if the short DRX cycle is used, a subframe corresponding to *t*1 satisfies [(SFN×10) + subframe number] modulo (*drx-ShortCycle*)=(*drx-StartOffset*) modulo (*drx-ShortCycle*); if the long DRX cycle is used, the subframe corresponding to *t*1 satisfies [(SFN×10) + subframe number] modulo (*drx-LongCycle*)=*drx-StartOffset*; or *t*1 may be a time after one *drx-SlotOffset* from the beginning of the subframe that meets the above conditions.

### Example 2

The UE in the RRC_CONNECTED state starts the drx-onDuration timer at the time t after the first time offset from the time when the LP-WUS is received by the UE, and the duration of the drx-onDuration timer is the duration configured by the network. Optionally, in the case where the UE is during the drx onDuration at the time *t* and the UE has not currently started the drx-onDuration timer, the UE starts the drx-onDuration timer.

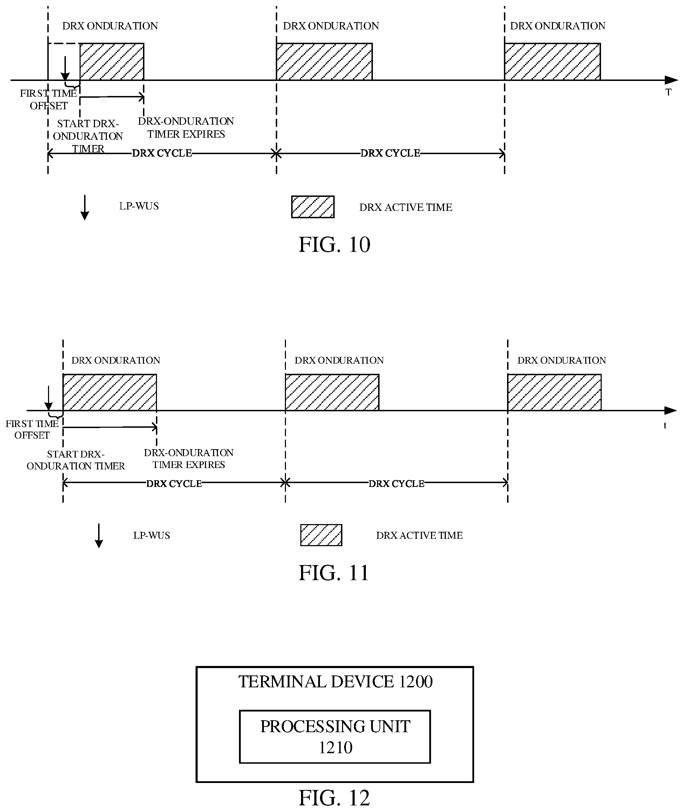

As illustrated in FIG. 10, the specific implementation of Example 2 is as follows.
1. The UE in the RRC_CONNECTED state and in the low-power receiver state monitors the LP-WUS. When the UE is in the low-power receiver state, only the LP-WUS receiver is in operation, and the main radio is in the OFF state.
2. When the LP-WUS is received by the UE, the UE wakes up the main radio. The UE starts the drx-onDuration timer at the time after the first time offset from the time when the LP-WUS is received by the UE. The duration of the drx-onDuration timer is the timer duration configured by the network through the RRC.

The value of the first time offset may be determined by the UE itself and then reported to the network, or may be determined by the network and then sent to the UE.

Optionally, the condition for the UE to start the drx-onDuration timer may further include the following: the UE is during the drx onDuration (e.g., the UE is during the period from *t*1 to *t*1+*drx-onDurationTimer*) at the time unit *n* after the first time offset from the time when the LP-WUS is received by the UE, and the UE has not currently started the drx-onDuration timer (e.g., the LP-WUS is received by the UE after the time *t*1).

The time unit may be, but is not limited to, any one of: a time symbol, a slot, or a subframe.

The time *t*1 may be the start time of the drx-onDuration timer in the related art, and reference can be made to related elaboration of Example 1.

### Example 3

The UE in the RRC_CONNECTED state starts the drx-onDuration timer at the time t after the first time offset from the time when the LP-WUS is received by the UE, and the UE periodically starts the drx-onDuration timer with the time t as the reference time. A cycle during which the drx-onDuration timer is started may be a short DRX cycle or a long DRX cycle, and the duration of the drx-onDuration timer may be the duration configured by the network.

As illustrated in FIG. 11, the specific implementation of Example 3 is as follows.
1. The UE in the RRC_CONNECTED state and in the low-power receiver state monitors the LP-WUS. When the UE is in the low-power receiver state, only the LP-WUS receiver is in operation, and the main radio is in the OFF state.
2. When the LP-WUS is received by the UE, the UE wakes up the main radio. The UE starts the drx-onDuration timer at the time after the first time offset from the time when the LP-WUS is received by the UE, and the UE periodically starts the drx-onDuration timer with the time *t* as the reference time. The cycle is a short DRX cycle or a long DRX cycle. The duration of the drx-onDuration timer is the timer duration configured by the network through RRC.

The value of the first time offset may be determined by the UE itself and then reported to the network, or may be determined by the network and then sent to the UE.

The DRX method provided in embodiments of the disclosure is the DRX method performed by the terminal based on the LP-WUS. With this method, after the LP-WUS is received by the terminal, the terminal can enter a DRX active time for PDCCH monitoring as soon as possible, thereby minimizing service delay and saving power of the terminal.

FIG. 12 is a schematic block diagram of a terminal device 1200 according to an embodiment of the disclosure. The terminal device 1200 can include a processing unit 1210. The processing unit 1210 is configured to start a first timer at a first time after a time when an LP-WUS is received by the processing unit, where the first timer is a drx-onDuration timer.

In an embodiment, the first time is a time after a first time offset from the time when the LP-WUS is received by the processing unit.

In an embodiment, the first time offset is determined by the terminal device or configured by a network device.

In an embodiment, the processing unit 1210 is configured to start the first timer in the case where the first timer is not started by the processing unit at the first time.

In an embodiment, the processing unit 1210 is configured to start the first timer in the case where the processing unit is during a drx onDuration and the first timer is not started by the processing unit at the first time.

In an embodiment, the first time includes at least one of the following time units: a time symbol, a slot, or a subframe.

In an embodiment, a duration of the first timer is a remaining duration of the drx onDuration.

In an embodiment, the processing unit 1210 is configured to periodically start the first timer with the first time as a reference time.

In an embodiment, a cycle during which the first timer is started is a short DRX cycle or a long DRX cycle.

In an embodiment, the duration of the first timer is configured by the network device.

In an embodiment, the first timer is the drx-onDuration timer.

In an embodiment, the terminal device is in an RRC_CONNECTED state and in a low-power receiver state.

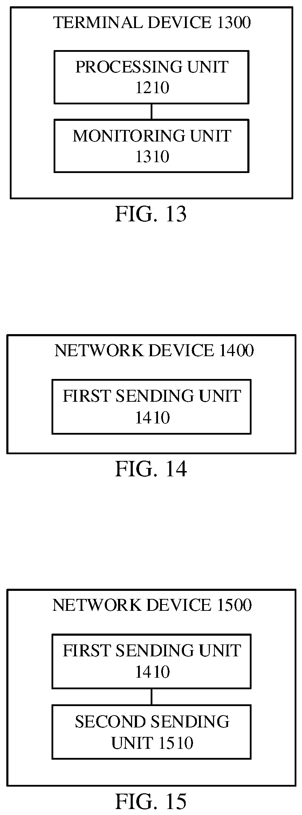

In an embodiment, as illustrated in FIG. 13, a terminal device 1300 further includes a monitoring unit 1310. The monitoring unit 1310 is configured to monitor the LP-WUS.

In an embodiment, the processing unit 1 210 is configured to wake up a main radio in the case where the LP-WUS is received by the processing unit.

The terminal device 1200 and the terminal device 1300 in embodiments of the disclosure can implement corresponding functions of the terminal device in the foregoing method embodiments. For the procedure, function, embodiment, and advantage corresponding to each module (sub-module, unit, or assembly, etc.) in the terminal device 1200 and the terminal device 1300, reference can be made to the corresponding illustrations in the foregoing method embodiments, which will not be repeated herein. It can be noted that, the functions of various modules (sub-modules, units, or assemblies, etc.) in the terminal device 1200 and the terminal device 1300 in embodiments of the disclosure may be implemented by different modules (sub-modules, units, or assemblies, etc.), or may be implemented by the same module (sub-module, unit, or assembly, etc.).

FIG. 14 is a schematic block diagram of a network device 1400 according to an embodiment of the disclosure. The network device 1400 can include a first sending unit 1410. The first sending unit 1410 is configured to send first configuration information to a terminal device, where the first configuration information is used for configuring a first timer, the first timer is a timer started by the terminal device at a first time after a time when an LP-WUS is received by the terminal device, and the first timer is a drx-onDuration timer.

In an embodiment, the first configuration information is used for configuring a duration of the first timer.

In an embodiment, a duration of the first timer is a remaining duration of a drx onDuration.

In an embodiment, the first time includes at least one of the following time units: a time symbol, a slot, or a subframe.

In an embodiment, the first time is a time after a first time offset from the time when the LP-WUS is received by the terminal device.

In an embodiment, as illustrated in FIG. 15, a network device 1500 further includes a second sending unit 1510. The second sending unit 1510 is configured to send second configuration information to the terminal device, where the second configuration information is used for configuring the first time offset.

The terminal device 1400 and the terminal device 1500 in embodiments of the disclosure can implement corresponding functions of the terminal device in the foregoing method embodiments. For the procedure, function, embodiment, and advantage corresponding to each module (sub-module, unit, or assembly, etc.) in the terminal device 1400 and the terminal device 1500, reference can be made to the corresponding illustrations in the foregoing method embodiments, which will not be repeated herein. It can be noted that, the functions of various modules (sub-modules, units, or assemblies, etc.) in the terminal device 1400 and the terminal device 1500 in embodiments of the disclosure may be implemented by different modules (sub-modules, units, or assemblies, etc.), or may be implemented by the same module (sub-module, unit, or assembly, etc.).

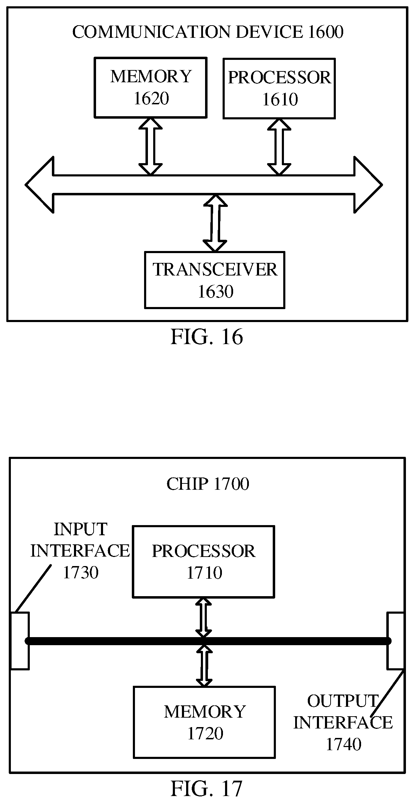

FIG. 16 is a schematic structural diagram of a communication device 1600 according to embodiments of the disclosure. The communication device 1600 includes a processor 1610. The processor 1610 can invoke and execute a computer program stored in a memory, to cause the communication device 1600 to implement the method in embodiments of the disclosure.

In an embodiment, the communication device 1600 can further include a memory 1620. The processor 1610 can invoke and execute a computer program stored in the memory 1620, to cause the communication device 1600 to implement the method in embodiments of the disclosure.

The memory 1620 can be a separate device independent of the processor 1610, or can be integrated into the processor 1610.

In an embodiment, the communication device 1600 may further include a transceiver 1630. The processor 1610 can control the transceiver 1630 to communicate with other devices, and specifically, to send information or data to other devices or receive information or data sent by other devices.

The transceiver 1630 may include a transmitter and a receiver. The transceiver 1630 can further include an antenna, where one or more antennas may be provided.

In an embodiment, the communication device 1600 can be the network device in embodiments of the disclosure, and the communication device 1600 can implement corresponding operations implemented by the network device in various methods in embodiments of the disclosure, which is not repeated herein for the sake of brevity.

In an embodiment, the communication device 1600 can be a terminal device in embodiments of the disclosure, and the communication device 1600 can implement corresponding operations implemented by the terminal device in various methods in embodiments of the disclosure, which is not repeated herein for the sake of brevity.

FIG. 17 is a schematic structural diagram of a chip 1700 according to embodiments of the disclosure. The chip 1700 includes a processor 1710. The processor 1710 can invoke and execute a computer program stored in a memory, to implement the method in embodiments of the disclosure.

In an embodiment, the chip 1700 can further include a memory 1720. The processor 1710 can invoke and execute a computer program stored in the memory 1720, to implement the method implemented by the terminal device and the network device in embodiments of the disclosure.

The memory 1720 can be a separate device independent of the processor 1710, or can be integrated into the processor 1710.

In an embodiment, the chip 1700 can further include an input interface 1730. The processor 1710 can control the input interface 1730 to communicate with other devices or chips, and specifically, to obtain information or data sent by other devices or chips.

In an embodiment, the chip 1700 can further include an output interface 1740. The processor 1710 can control the output interface 1740 to communicate with other devices or chips, and specifically, to output information or data to other devices or chips.

In an embodiment, the chip can be applied to the network device in embodiments of the disclosure, and the chip can implement corresponding operations implemented by the network device in various methods in embodiments of the disclosure, which is not repeated herein for the sake of brevity.

In an embodiment, the chip can be applied to the terminal device in embodiments of the disclosure, and the chip can implement corresponding operations implemented by the terminal device in various methods in embodiments of the disclosure, which is not repeated herein for the sake of brevity.

The chip applied to the network device and the chip applied to the terminal device can be the same as or different from each other.

It can be understood that the chip mentioned in embodiments of the disclosure can also be referred to as a system-on-chip (SOC).

The processor can be a general-purpose processor, a digital signal processor (DSP), an application-specific integrated circuit (ASIC), a field programmable gate array (FPGA), or other programmable logic devices, discrete gates or transistor logic devices, discrete hardware components. The general-purpose processor can be a microprocessor, any conventional processor, etc.

The memory can be a volatile memory or a non-volatile memory, or can include both the volatile memory and the non-volatile memory. The non-volatile memory can be a read-only memory (ROM), a programmable ROM (PROM), an erasable PROM (EPROM), an electrically EPROM (EEPROM), or a flash memory. The volatile memory can be a random access memory (RAM).

It can be understood that the memory above is intended for illustration rather than limitation. For example, the memory in embodiments of the disclosure can also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), etc. In other words, the memory in embodiments of the disclosure is intended to include, but is not limited to, these and any other suitable types of memory.

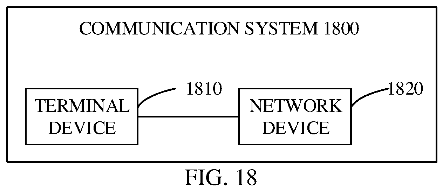

FIG. 18 is a schematic block diagram of a communication system 1800 according to embodiments of the disclosure. The communication system 1800 includes a terminal device 1810 and a network device 1820.

The terminal device 1810 is configured to start a first timer at a first time after a time when an LP-WUS is received by the terminal device, where the first timer is a drx-onDuration timer. The network device 1820 is configured to send first configuration information to the terminal device, where the first configuration information is used for configuring the first timer. The terminal device 1810 can be configured to implement the corresponding functions implemented by the terminal device in the above method, and the network device 1820 can be configured to implement the corresponding functions implemented by the network device in the above method, which are not repeated herein for the sake of brevity.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of the embodiments of the disclosure are performed. The computer can be a general-purpose computer, a special-purpose computer, a computer network, or other programmable apparatuses. The computer instruction can be stored in a computer-readable storage medium, or sent from one computer-readable storage medium to another computer-readable storage medium. For example, the computer instruction can be sent from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer-accessible usable medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It can be understood that, in various embodiments of the disclosure, the magnitude of a sequence number of each process does not mean an order of execution, and the order of execution of each process can be determined by its function and internal logic and shall not constitute any limitation to the implementation of the embodiments of the disclosure.

It will be evident to those skilled in the art that, for the sake of convenience and simplicity, in terms of the specific working processes of the foregoing systems, apparatuses, and units, reference can be made to the corresponding processes in the foregoing method embodiments, which is not repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A discontinuous reception (DRX) method, comprising:
starting, by a terminal device, a first timer at a first time after a time when a low-power wake-up signal (LP-WUS) is received by the terminal device, wherein the first timer is a drx-onDuration timer.

2. The method of claim 1, wherein the first time is a time after a first time offset from the time when the LP-WUS is received.

3. The method of claim 2, wherein the first time offset is determined by the terminal device or configured by a network device.

4. The method of any one of claims 1 to 3, wherein starting, by the terminal device, the first timer at the first time after the time when the LP-WUS is received by the terminal device comprises:
starting, by the terminal device, the first timer in a case where the first timer is not started by the terminal device at the first time.

5. The method of any one of claims 1 to 3, wherein starting, by the terminal device, the first timer at the first time after the time when the LP-WUS is received by the terminal device comprises:
starting, by the terminal device, the first timer in a case where the terminal device is during a drx onDuration and the first timer is not started by the terminal device at the first time.

6. The method of any one of claims 1 to 5, wherein the first time comprises at least one of the following time units: a time symbol, a slot, or a subframe.

7. The method of any one of claims 1 to 6, wherein a duration of the first timer is a remaining duration of a drx onDuration.

8. The method of any one of claims 1 to 7, further comprising:
starting periodically, by the terminal device, the first timer with the first time as a reference time.

9. The method of any one of claims 1 to 8, wherein a cycle during which the first timer is started is a short DRX cycle or a long DRX cycle.

10. The method of any one of claims 1 to 9, wherein a duration of the first timer is configured by a network device.

11. The method of any one of claims 1 to 10, wherein the terminal device is in an RRC_CONNECTED state and in a low-power receiver state.

12. The method of any one of claims 1 to 11, further comprising:
monitoring, by the terminal device, the LP-WUS.

13. The method of any one of claims 1 to 12, further comprising:
waking up, by the terminal device, a main radio in a case where the LP-WUS is received by the terminal device.

14. A discontinuous reception (DRX) method, comprising:
sending, by a network device, first configuration information to a terminal device, wherein the first configuration information is used for configuring a first timer, the first timer is a timer started by the terminal device at a first time after a time when a low-power wake-up signal (LP-WUS) is received by the terminal device, and the first timer is a drx-onDuration timer.

15. The method of claim 14, wherein the first configuration information is used for configuring a duration of the first timer.

16. The method of claim 14 or 15, wherein a duration of the first timer is a remaining duration of a drx onDuration.

17. The method of any one of claims 14 to 16, wherein the first time comprises at least one of the following time units: a time symbol, a slot, or a subframe.

18. The method of any one of claims 14 to 17, wherein the first time is a time after a first time offset from the time when the LP-WUS is received by the terminal device.

19. The method of claim 18, further comprising:
sending, by the network device, second configuration information to the terminal device, wherein the second configuration information is used for configuring the first time offset.

20. A terminal device, comprising:
a processing unit configured to start a first timer at a first time after a time when a low-power wake-up signal (LP-WUS) is received by the processing unit, wherein the first timer is a drx-onDuration timer.

21. The terminal device of claim 20, wherein the first time is a time after a first time offset from the time when the LP-WUS is received by the processing unit.

22. The terminal device of claim 21, wherein the first time offset is determined by the terminal device or configured by a network device.

23. The terminal device of any one of claims 20 to 22, wherein the processing unit is configured to start the first timer in a case where the first timer is not started by the processing unit at the first time.

24. The terminal device of any one of claims 20 to 22, wherein the processing unit is configured to start the first timer in a case where the processing unit is during a drx onDuration and the first timer is not started by the processing unit at the first time.

25. The terminal device of any one of claims 20 to 24, wherein the first time comprises at least one of the following time units: a time symbol, a slot, or a subframe.

26. The terminal device of any one of claims 20 to 25, wherein a duration of the first timer is a remaining duration of a drx onDuration.

27. The terminal device of any one of claims 20 to 26, wherein the processing unit is configured to periodically start the first timer with the first time as a reference time.

28. The terminal device of any one of claims 20 to 27, wherein a cycle during which the first timer is started is a short DRX cycle or a long DRX cycle.

29. The terminal device of any one of claims 20 to 28, wherein a duration of the first timer is configured by a network device.

30. The terminal device of any one of claims 20 to 29, wherein the terminal device is in an RRC_CONNECTED state and in a low-power receiver state.

31. The terminal device of any one of claims 20 to 30, further comprising:
a monitoring unit configured to monitor the LP-WUS.

32. The terminal device of any one of claims 20 to 31, wherein the processing unit is configured to wake up a main radio in a case where the LP-WUS is received by the processing unit.

33. A network device, comprising:
a first sending unit configured to send first configuration information to a terminal device, wherein the first configuration information is used for configuring a first timer, the first timer is a timer started by the terminal device at a first time after a time when a low-power wake-up signal (LP-WUS) is received by the terminal device, and the first timer is a drx-onDuration timer.

34. The network device of claim 33, wherein the first configuration information is used for configuring a duration of the first timer.

35. The network device of claim 33 or 34, wherein a duration of the first timer is a remaining duration of a drx onDuration.

36. The network device of any one of claims 33 to 35, wherein the first time comprises at least one of the following time units: a time symbol, a slot, or a subframe.

37. The network device of any one of claims 33 to 36, wherein the first time is a time after a first time offset from the time when the LP-WUS is received by the terminal device.

38. The network device of claim 37, further comprising:
a second sending unit configured to send second configuration information to the terminal device, wherein the second configuration information is used for configuring the first time offset.

39. A terminal device, comprising:
a memory configured to store a computer program; and
a processor configured to invoke and execute the computer program stored in the memory, to cause the terminal device to perform the method of any one of claims 1 to 13.

40. A network device, comprising:
a memory configured to store a computer program; and
a processor configured to invoke and execute the computer program stored in the memory, to cause the network device to perform the method of any one of claims 14 to 19.

41. A chip, comprising:
a processor configured to invoke and execute a computer program stored in a memory, to cause a device equipped with the chip to perform the method of any one of claims 1 to 13 or claims 14 to 19.

42. A computer-readable storage medium configured to store a computer program which, when executed by a device, causes the device to perform the method of any one of claims 1 to 13 or claims 14 to 19.

43. A computer program product comprising computer program instructions that are operable with a computer to perform the method of any one of claims 1 to 13 or claims 14 to 19.

44. A computer program being operable with a computer to perform the method of any one of claims 1 to 13 or claims 14 to 19.
